# EUROPÄISCHE PATENTSCHRIFT

(11) **EP 2 619 873 B1**
(45) Veröffentlichungstag und Bekanntmachung des Hinweises auf die Patenterteilung: **06.03.2019**
(21) Anmeldenummer: 11761021.2
(22) Anmeldetag: 25.08.2011
(51) Int. Cl.: H02J 7/00, H02M 7/501, H02P 27/14, B60L 11/18, H02J 7/14

(54) **SYSTEM ZUM LADEN EINES ENERGIESPEICHERS UND VERFAHREN ZUM BETRIEB DES LADESYSTEMS**
SYSTEM FOR CHARGING AN ENERGY STORE, AND METHOD FOR OPERATING THE CHARGING SYSTEM
SYSTÈME POUR CHARGER UN ACCUMULATEUR D'ÉNERGIE ET PROCÉDÉ DE FONCTIONNEMENT DU SYSTÈME DE CHARGE

(30) Priorität: 20.09.2010 DE 102010041068
(43) Veröffentlichungstag der Anmeldung: 31.07.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE)
(86) Internationale Anmeldenummer: PCT/EP2011/064616
(87) Internationale Veröffentlichungsnummer: WO 2012/038184

(56) Entgegenhaltungen:
- WO-A1-02/063758
- DE-A1- 10 103 031
- US-A- 5 642 275
- US-A1- 2005 231 152
- US-A1- 2006 164 028

## Beschreibung

Die Erfindung betrifft ein System zum Laden eines Energiespeichers und Verfahren zum Betrieb des Ladesystems.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen. Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten. In den älteren Anmeldungen DE 10 2010 027 857 A1 und DE 10 2010 027 861 A1 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert.

Die Druckschrift WO 02/063758 A1 offenbart einen spannungseinprägenden Umrichter, dessen Phasenmodule Reihenschaltungen aus zweipoligen Submodulen aufweisen. Die Submodule verfügen jeweils über einen Speicherkondensator und über Leistungshalbleiterschalter, die als Vollbrückenschaltung miteinander verschaltet sind.

### Offenbarung der Erfindung

Die vorliegende Erfindung schafft ein System zum Laden mindestens einer Energiespeicherzelle in einem steuerbaren Energiespeicher, welcher der Steuerung und der elektrischen Energieversorgung einer n-phasigen elektrischen Maschine, mit n ≥ 1, dient. Dabei weist der steuerbare Energiespeicher n parallele Energieversorgungszweige auf, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energieversorgungszweige sind einerseits mit einem Bezugspotential - im Folgenden als Bezugsschiene bezeichnet - verbunden und andererseits mit jeweils einer Phase der elektrischen Maschine verbindbar. In Abhängigkeit von Steuersignalen unterbrechen die Koppeleinheiten durch Öffnen eines ersten Schaltelements und eines zweiten Schaltelements der zugeordneten steuerbaren Koppeleinheit entweder den Energieversorgungszweig oder die jeweils zugeordneten Energiespeicherzellen werden durch Öffnen des zweiten Schaltelements der zugeordneten steuerbaren

Koppeleinheit abgekoppelt und dieses zweite Schaltelement und die zugeordneten Energiespeicherzellen werden in dem jeweiligen Energieversorgungszweig durch Schließen des ersten Schaltelements überbrückt, oder die Koppeleinheiten werden durch Öffnen des ersten Schaltelements und durch Schließen des zweiten Schaltelements der zugeordneten steuerbaren Koppeleinheit in jeweils zugeordneten Energiespeicherzellen in den Energieversorgungszweig geschaltet. Die Energieversorgungszweige des steuerbaren Energiespeichers und die Phasen der elektrischen Maschine sind über einen steuerbaren n-phasigen bidirektionalen Brückengleichrichter mit einem Gleichspannungszwischenkreis verbunden. Die Bezugsschiene des steuerbaren Energiespeichers ist mit einer Bezugsschiene des Gleichspannungszwischenkreises verbunden. Um das Laden von zumindest einer der Energiespeicherzellen zu ermöglichen, ist der Gleichspannungszwischenkreis elektrisch mit einer Ladeeinrichtung verbunden. Dabei sind mindestens ein High-Side-Schalter des Brückengleichrichters zusammen mit den Statorwicklungen der elektrischen Maschine während eines Ladevorgangs analog zu einem Tiefsetzsteller und/oder die Koppeleinheiten, welche zu ladenden Energiespeicherzellen zugeordnet sind, zusammen mit den Statorwicklungen der elektrischen Maschine während eines Ladevorgangs analog zu einem Hochsetzsteller betreibbar, wobei den Statorwicklungen Energie zuführbar und dort speicherbar ist.

Die vorliegende Erfindung schafft auch ein Verfahren zum Betrieb eines erfindungsgemäßen Ladesystems, bei dem eine Ladeeinrichtung an den Gleichspannungszwischenkreis angeschlossen wird, für den Fall, dass ein Spannungsniveau im Gleichspannungszwischenkreis höher ist als das Spannungsniveau der zu ladenden Energiespeicherzellen. In einer Ladephase wird elektrische Energie in Statorwicklungen der elektrischen Maschine gespeichert, indem alle Koppeleinheiten, welche zu ladenden Energiespeicherzellen zugeordnet sind, derart gesteuert werden, dass die jeweils zugeordneten Energiespeicherzellen in den Energieversorgungszweig geschaltet werden. Alle Koppeleinheiten, welche in dem Energieversorgungszweig von zu ladenden Energiespeicherzellen liegen, selbst aber keinen zu ladenden Energiespeicherzellen zugeordnet sind, werden derart gesteuert, dass die jeweils zugeordneten Energiespeicherzellen durch einen Schalter der zugeordneten steuerbaren Koppeleinheit isoliert werden und dieser Schalter in dem Energieversorgungszweig überbrückt wird. Alle übrigen Koppeleinheiten werden derart gesteuert, dass die jeweiligen Energieversorgungszweige unterbrochen werden. Außerdem wird mindestens ein steuerbarer High-Side-Schalter der steuerbaren bidirektionalen Gleichrichtereinheit, welcher in einem Gleichrichterzweig angeordnet ist, der mit einem Energieversorgungszweig des steuerbaren Energiespeichers verbunden ist, der keine zu ladenden Energiespeicherzellen aufweist, geschlossen. In einer der Ladephase folgenden Freilaufphase werden alle Koppeleinheiten, welche zu ladenden Energiespeicherzellen zugeordnet sind, derart gesteuert, dass die jeweils zugeordneten Energiespeicherzellen in den Energieversorgungszweig geschaltet werden. Alle Koppeleinheiten, welche in dem Energieversorgungszweig von zu ladenden Energiespeicherzellen liegen, selbst aber keinen zu ladenden Energiespeicherzellen zugeordnet sind, werden derart gesteuert, dass die jeweils zugeordneten Energiespeicherzellen durch einen Schalter der zugeordneten steuerbaren Koppeleinheit isoliert werden und dieser Schalter in dem Energieversorgungszweig überbrückt wird. Alle übrigen Koppeleinheiten werden derart gesteuert, dass die jeweiligen Energieversorgungszweige unterbrochen werden, und die steuerbaren High-Side-Schalter der steuerbaren bidirektionalen Gleichrichtereinheit werden geöffnet.

Ist die elektrische Maschine von dem steuerbaren Energiespeicher abkoppel- oder abtrennbar, so kann während der Ladephase auch ein beliebiger steuerbarer High-Side-Schalter der steuerbaren bidirektionalen Gleichrichtereinheit geschlossen werden.

Die Erfindung schafft außerdem ein Verfahren zum Betrieb eines erfindungsgemäßen Ladesystems, bei dem eine Ladeeinrichtung an den Gleichspannungszwischenkreis angeschlossen wird, für den Fall, dass ein Spannungsniveau im Gleichspannungszwischenkreis niedriger ist als das Spannungsniveau der zu ladenden Energiespeicherzellen. In einer Ladephase wird elektrische Energie in Statorwicklungen der elektrischen Maschine gespeichert, indem alle Koppeleinheiten, welche in dem Energieversorgungszweig von zu ladenden Energiespeicherzellen liegen, derart gesteuert werden, dass die jeweils zugeordneten Energiespeicherzellen durch einen Schalter der zugeordneten steuerbaren Koppeleinheit isoliert werden und dieser Schalter in dem Energieversorgungszweig überbrückt wird. Alle übrigen Koppeleinheiten werden derart gesteuert, dass die jeweiligen Energieversorgungszweige unterbrochen werden. Außerdem wird mindestens ein steuerbarer High-Side-Schalter der steuerbaren bidirektionalen Gleichrichtereinheit, welcher in einem Gleichrichterzweig angeordnet ist, der mit einem Energieversorgungszweig des steuerbaren Energiespeichers verbunden ist, der keine zu ladenden Energiespeicherzellen aufweist, geschlossen. In einer der Ladephase folgenden Freilaufphase werden alle Koppeleinheiten, welche zu ladenden Energiespeicherzellen zugeordnet sind, derart gesteuert, dass die jeweils zugeordneten Energiespeicherzellen in den Energieversorgungszweig geschaltet werden.

Alle Koppeleinheiten, welche in dem Energieversorgungszweig von zu ladenden Energiespeicherzellen liegen, selbst aber keinen zu ladenden Energiespeicherzellen zugeordnet sind, werden derart gesteuert, dass die jeweils zugeordneten Energiespeicherzellen durch einen Schalter der zugeordneten steuerbaren Koppeleinheit isoliert werden und dieser Schalter in dem Energieversorgungszweig überbrückt wird. Alle übrigen Koppeleinheiten werden derart gesteuert, dass die jeweiligen Energieversorgungszweige unterbrochen werden und die steuerbaren High-Side-Schalter der steuerbaren bidirektionalen Gleichrichtereinheit werden geschlossen.

Ist die elektrische Maschine von dem steuerbaren Energiespeicher abkoppel- oder abtrennbar, so kann während der Ladephase auch bei diesem Verfahren ein beliebiger steuerbarer High-Side-Schalter der steuerbaren bidirektionalen Gleichrichtereinheit geschlossen werden.

### Vorteile der Erfindung

Die Erfindung basiert auf der Grundidee, die Gleichrichtereinheit steuerbar und bidirektional auszuführen und diese gemeinsam mit den Koppeleinheiten einerseits und den Statorwicklungen der elektrischen Maschine andererseits für eine Ladefunktion mitzunutzen. Für den Fall, dass nach Anschluss einer Ladeeinrichtung an den Gleichspannungszwischenkreis ein Spannungsniveau im Gleichspannungszwischenkreis höher ist als das Spannungsniveau der zu ladenden Energiespeicherzellen wird eine notwendige Tiefsetzstellerfunktion dadurch realisiert, dass High-Side-Schalter einer als Brückengleichrichter ausgestalteten Gleichrichtereinheit und die Statorwicklungen während eines Ladevorgangs analog zu einem Tiefsetzsteller betrieben werden. Dabei wird den Statorwicklungen in einer Ladephase Energie zugeführt und dort gespeichert, welche anschließend in einer Freilaufphase an die zu ladenden Energiespeicherzellen abgegeben wird. Das notwendige Tiefsetzverhältnis wird durch entsprechend impulsförmige, insbesondere pulsweitenmodulierte, Ansteuerung mindestens eines High-Side-Schalters der Gleichrichtereinheit eingestellt. Für den Fall, dass nach Anschluss einer Ladeeinrichtung an den Gleichspannungszwischenkreis ein Spannungsniveau im Gleichspannungszwischenkreis niedriger ist als das Spannungsniveau der zu ladenden Energiespeicherzellen kann eine notwendige Hochsetzstellerfunktion dadurch realisiert werden, dass die Koppeleinheiten, welche zu ladenden Energiespeicherzellen zugeordnet sind, und die Statorwicklungen analog zu einem Hochsetzsteller betrieben werden, wobei den Statorwicklungen Energie zugeführt und dort gespeichert wird, welche anschließend in einer Freilaufphase an die zu ladenden Energiespeicherzellen abgegeben wird. Das notwendige Hochsetzverhältnis wird dabei durch entsprechend impulsförmige, insbesondere pulsweitenmodulierte, Ansteuerung der Koppeleinheiten, welche den zu ladenden Energiespeicherzellen zugeordnet sind, eingestellt.

Dabei entsteht jeweils nur minimaler zusätzlicher Hardware-Aufwand, was mit geringen Kosten und geringem Platzbedarf einhergeht. Außerdem kann mit einem erfindungsgemäßen System ggf. auch eine in dem Gleichspannungszwischenkreis vorhandener weiterer Energiespeicher geladen werden.

Mit dem erfindungsgemäßen System und den erfindungsgemäßen Verfahren ist sowohl die Ladung von Energiespeicherzellen eines einzelnen Energiespeichermoduls als auch die gleichzeitige Ladung von Energiespeicherzellen mehrerer Energiespeichermodule möglich. Im Fall einer mehrphasigen elektrischen Maschine können auch die Energiespeicherzellen von Energiespeichermodulen, welche in verschiedenen Energieversorgungszweigen liegen, gleichzeitig geladen werden. Dabei ist aber zu berückichtigen, dass während des Betriebs der elektrischen Maschine nur die Energiespeicherzellen in n-1 Energieversorgungszweigen gleichzeitig geladen werden können. Durch Abkoppeln der elektrischen Maschine und Vorsehen zusätzlicher Ladeinduktivitäten können aber auch Energiespeicherzellen in allen Energieversorgungszweigen gleichzeitig geladen werden. Sollen die Energiespeicherzellen mehrerer Module gleichzeitig geladen werden, so ist es vorteilhaft, wenn die Energiespeichermodule hochohmig symmetriert sind, so dass äquivalente Spannungsabfälle an den einzelnen Energiespeichermodulen auftreten. Alternativ können die Koppeleinheiten aber auch auf entsprechend hohe Sperrfähigkeiten ausgelegt sein. Aufgabe der Ladeeinrichtung ist es lediglich, eine geeignete Gleichspannung zur Verfügung zu stellen. Insofern kann die Ladeeinrichtung auf verschiedenen Wegen realisiert sein. Sie kann z.B. als ein- oder mehrphasiges Netzladegerät oder auch als Gleichspannungs-Ladestation ausgestaltet sein.

Unerwünschte Momente in der elektrischen Maschine während des Ladevorgangs können dadurch vermieden werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Sind die Induktivitäten der Statorwicklungen der elektrischen Maschine nicht ausreichend, so kann zwischen die Ladeeinrichtung und die elektrische Maschine oder zwischen die Ladeeinrichtung und den steuerbaren Energiespeicher eine zusätzliche Ladeinduktivität geschaltet sein.

Gemäß einer Ausführungsform der Erfindung ist eine Trenneinheit vorgesehen, durch welche die elektrische Maschine während eines Ladevorgangs von dem steuerbaren Energiespeicher abgetrennt werden kann. Auf diese Weise können die zusätzlichen Ladeinduktivitäten auch unabhängig von den Statorwicklungen zur Realisierung der erforderlichen Hoch- oder Tiefsetzstellerfunktion genutzt werden, was die Möglichkeit eröffnet, auch Energiepeicherzellen in allen Energieversorgungszweigen gleichzeitig zu laden.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: ein schematisches Blockschaltbild eines Energieversorgungsnetzes mit einem erfindungsgemäßen Ladesystem,
- Fig. 2: eine schematische Darstellung eines erfindungsgemäßen Ladesystems in einer Ladephase, wenn ein Spannungsniveau im Gleichspannungszwischenkreis höher ist als ein Spannungsniveau der zu ladenden Energiespeicherzellen,
- Fig. 3: das Ladesystem gemäß Fig. 2 in einer Freilaufphase,
- Fig. 4: eine schematische Darstellung eines erfindungsgemäßen Ladesystems in einer Ladephase, wenn ein Spannungsniveau im Gleichspannungszwischenkreis niedriger ist als ein Spannungsniveau der zu ladenden Energiespeicherzellen,
- Fig. 5: eine schematische Darstellung eines erfindungsgemäßen Ladesystems mit zusätzlichen Ladeinduktivitäten und einer Trenneinheit und
- Fig. 6: eine schematische Darstellung eines Ladesystems ohne externen Rückleiter.

### Ausführungsformen der Erfindung

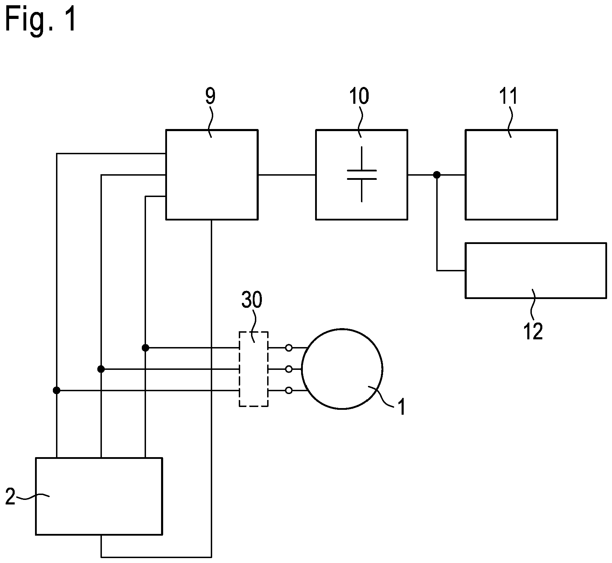

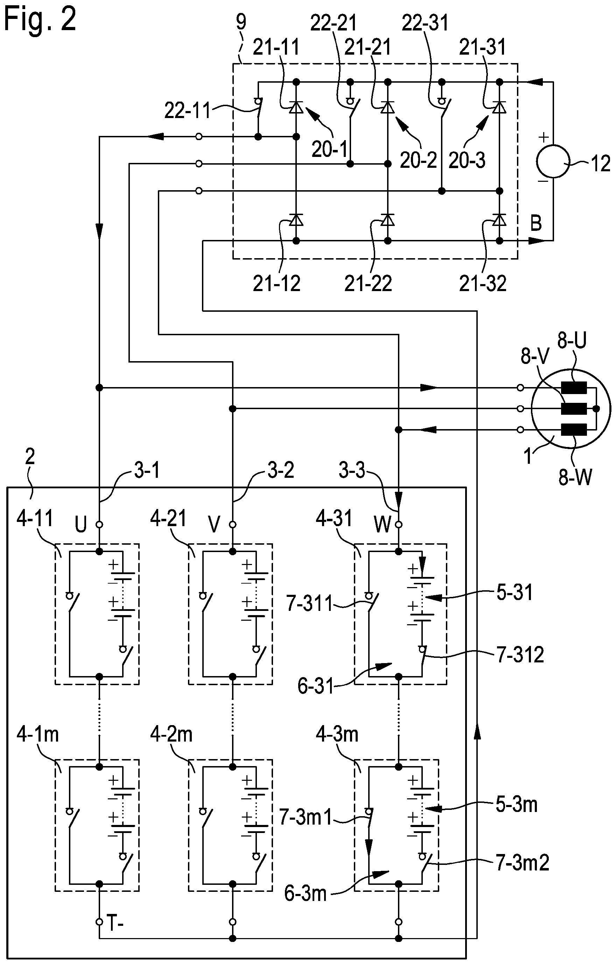

Figur 1 zeigt ein schematisches Blockschaltbild eines Energieversorgungsnetzes mit einem erfindungsgemäßen Ladesystem. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in der dargestellten Ausführungsform ein niedriges Potential führt, und andererseits jeweils mit einzelnen Phasen U, V, W der elektrischen Maschine 1 verbunden sind (vgl. Figuren 2, 3, 4). Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen, welche in den Figuren 2, 3 und 4 aus Gründen der Übersichtlichkeit lediglich in dem mit der Phase W der elektrischen Maschine 1 verbundenen Energieversorgungszweig 3-3 mit Bezugszeichen 5-31 bis 5-3m versehen sind. Die Energiespeichermodule 4 umfassen des Weiteren jeweils eine Koppeleinheit, welche den Energiespeicherzellen 5 des jeweiligen Energiespeichermoduls 4 zugeordnet ist. Aus Gründen der Übersichtlichkeit sind auch die Koppeleinheiten lediglich in dem Energieversorgungszweig 3-3 mit Bezugszeichen 6-31 bis 6-3m versehen. In der in den Figuren 2, 3 und 4 dargestellten Ausführungsvariante werden die Koppeleinheiten 6 jeweils durch zwei steuerbare Schaltelemente 7-311 und 7-312 bis 7-3m1 und 7-3m2 gebildet. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Kopplungseinheit 6 zu unterbrechen. Alternativ können die Energiespeicherzellen 5 durch Schließen jeweils eines der Schaltelemente 7 einer Koppeleinheit 6 entweder überbrückt werden, z.B. durch Schließen des Schalters 7-311, oder in den jeweiligen Energieversorgungszweig 3 geschaltet werden, z.B. durch Schließen des Schalters 7-312.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig 3 in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die im dargestellten Ausführungsbeispiel in Sternschaltung miteinander verschaltet sind. Die elektrische Maschine 1 ist im dargestellten Ausführungsbeispiel als dreiphasige Drehstrommaschine ausgeführt, kann aber auch weniger oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Unterbrechen des Energieversorgungszweiges, Überbrücken der Energiespeicherzellen und Schalten der Energiespeicherzellen in den Energieversorgungszweig) realisierbar sind. Beispielhafte alternative Ausgestaltungen einer Koppeleinheit ergeben sich aus den älteren Anmeldungen DE 10 2010 027 857 A1 und DE 10 2010 027 861 A1. Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

Der steuerbare Energiespeicher 2 liefert während eines Motorbetriebs der elektrischen Maschine 1 ausgangsseitig eine Wechselspannung zur Ansteuerung der elektrischen Maschine 1. Im Gegensatz zu konventionellen Systemen, bei welchen eine elektrische Maschine über einen Wechselrichter gesteuert wird und durch einen davon getrennten elektrischen Energiespeicher mit elektrischer Energie versorgt wird, steht jedoch keine Gleichspannung zur unmittelbaren Energieversorgung von elektrischen Verbrauchern, wie z.B. Hochvoltverbrauchern in einem Fahrzeugbordnetz, oder als Eingangsgröße für einen Gleichspannungswandler zur Verfügung.

Deshalb ist eine in ihrer Phasenanzahl an die Phasenanzahl der elektrischen Maschine 1 angepasste, im vorliegenden Ausführungsbeispiel also dreiphasige Gleichrichtereinheit 9 vorgesehen, welche eingangsseitig mit den Energieversorgungszweigen 3 des steuerbaren Energiespeichers 2 und den jeweils zugehörigen Phasen U, V, W der elektrischen Maschine verbunden ist und ausgangsseitig mit einem Gleichspannungszwischenkreis 10 verbunden ist. Der Gleichspannungszwischenkreis 10 wird dabei im Wesentlichen durch einen nicht eigens dargestellten Zwischenkreiskondensator gebildet. Dem Gleichspannungszwischenkreis 10 ist ein zweiter Energiespeicher 11 nachgeschaltet, aus welchem nicht dargestellte elektrische Verbraucher mit Gleichspannung versorgbar sind. Je nach Anwendungsfall kann dem Ziwschenkreiskondensator auch ein Gleichspannungswandler vor- oder nachgeschaltet sein.

Um die Ladung von Energiespeicherzellen 5 eines oder mehrerer Energiespeichermodule 4 zu ermöglichen, ist eine Ladeeinrichtung 12 mit dem Gleichspannungszwischenkreis 10 verbindbar. Die Ladeeinrichtung 12 stellt Energie zum Laden der Energiespeicherzellen 5 zur Verfügung und kann z.B. als ein- oder mehrphasiges Netzladegerät oder auch als Gleichspannungs-Ladestation ausgestaltet sein.

Sollen zur Regelung der elektrischen Maschine 1 die Phasenströme der elektrischen Maschine 1 gemessen werden, ist darauf zu achten, dass die Strommessung erst nach dem Abgriff des Ladegerätes 11 erfolgt. In Figur 1 ist dies durch einen Block mit dem Bezugszeichen 30 angedeutet.

Die Figuren 2 bis 4 zeigen schematisch ein erfindungsgemäßes Ladesystem. Die dreiphasige Gleichrichtereinheit 9 umfasst drei parallele Gleichrichterzweige 20-1, 20-2 und 20-3, welche mit jeweils einem Energieversorgungszweig 3-1, 3-2 bzw. 3-3 des steuerbaren Energiespeichers 2 und der jeweils zugehörigen Phase U, V bzw. W der elektrischen Maschine 1 verbunden sind. Die Gleichrichtereinheit 9 ist als Diodengleichrichter in Brückenschaltung ausgeführt. Dabei sind parallel zu denjenigen Dioden 21-11, 21-21 und 21-31 (High-Side-Dioden), welche mit einem hohen Potential verbunden sind, jeweils steuerbare Schaltelemente 22-11 bzw. 22-21 bzw. 22-31 (High-Side-Schalter) geschaltet. Die Dioden 21-12, 21-22 und 21-32, welche mit einem niedrigen Potential einer Bezugsschiene B des Gleichspannungszwischenkreises 10 verbunden sind (Low-Side-Dioden), sind in diesem Ausführungsbeispiel ohne parallel geschaltete steuerbare Schaltelemente ausgeführt. Es können aber auch entsprechende Low-Side-Schalter vorgesehen sein. Es ist auch denkbar, die Dioden 21 vollständig durch steuerbare Schaltelemente 22 zu ersetzen.

Die Ladeeinrichtung 12 ist vereinfachend in Form eines Ersatzschaltbildes als Gleichspannungsquelle dargestellt, welche direkt an die Gleichrichtereinheit 9 angeschlossen ist. Dabei ist ein Pluspol der Ladeeinrichtung 12 mit einer ein hohes Potential führenden Spannungsschiene der Gleichrichtereinheit 9 und der Minuspol der Ladeeinrichtung mit der Bezugsschiene B des Gleichspannungszwischenkreises 10 verbunden. Die Bezugsschiene B des Gleichspannungszwischenkreises 10 ist außerdem mit der Bezugsschiene T- des steuerbaren Energiespeichers 2 verbunden, wodurch ein externer Rückleiter gebildet wird.

Im Folgenden wird exemplarisch der Ladevorgang der Energiespeicherzellen 5 eines einzelnen Energiespeichermoduls 4, nämlich der Energiespeicherzellen 5-31 des Energiespeichermoduls 4-31 in dem Energieversorgungszweig 3-3 beschrieben.

Es sei zunächst angenommen, dass ein Spannungsniveau im Gleichspannungszwischenkreis 10 höher ist als das Spannungsniveau der zu ladenden Energiespeicherzellen 5-31. Während einer Ladephase, welche in Fig. 2 dargestellt ist, wird die Koppeleinheit 6-31, welche den zu ladenden Energiespeicherzellen 5-31 zugeordnet ist, durch eine nicht dargestellte Steuereinheit derart gesteuert, dass sie in den Energieversorgungszweig 3-3 geschaltet wird. Dies wird konkret dadurch erreicht, dass das Schaltelement 7-311 geöffnet wird, wohingegen das Schaltelement 7-312 geschlossen wird. Alle übrigen Koppeleinheiten 6-32 bis 6-3m, welche in dem Energieversorgungszweig 3-3 liegen, in welchem auch die zu ladenden Energiespeicherzellen 5-31 liegen, werden durch die nicht dargestellte Steuereinheit derart gesteuert, dass die jeweils zugeordneten Energiespeicherzellen 5-32 bis 5-3m überbrückt werden. Dies wird konkret dadurch erreicht, dass die Schaltelemente 7-321 bis 3-m1 geschlossen werden, wohingegen die Schaltelemente 7-322 bis 7-3m2 geöffnet werden. Alle übrigen Koppeleinheiten 6, das heißt alle Koppeleinheiten 6 in den Energiespeichermodulen 4 der anderen beiden Energieversorgungszweige 3-1 und 3-2 werden derart gesteuert, dass die jeweiligen Energieversorgungszweige 3-1 bzw. 3-2 unterbrochen werden. Konkret wird dies dadurch erreicht, dass jeweils beide Schaltelemente der Koppeleinheiten 6 geöffnet werden. Der High-Side-Schalter 22-11 wird geschlossen.

Eine derartige Ansteuerung der Koppeleinheiten 6 und des High-Side-Schalters 22-11 bewirkt einen Stromfluss durch die Statorwicklungen 8-U und 8-W, so dass während der Ladephase elektrische Energie in den Statorwicklungen 8-U und 8-W gespeichert wird. Dieser Stromfluss ist in Figur 2 durch entsprechende Pfeile gekennzeichnet.

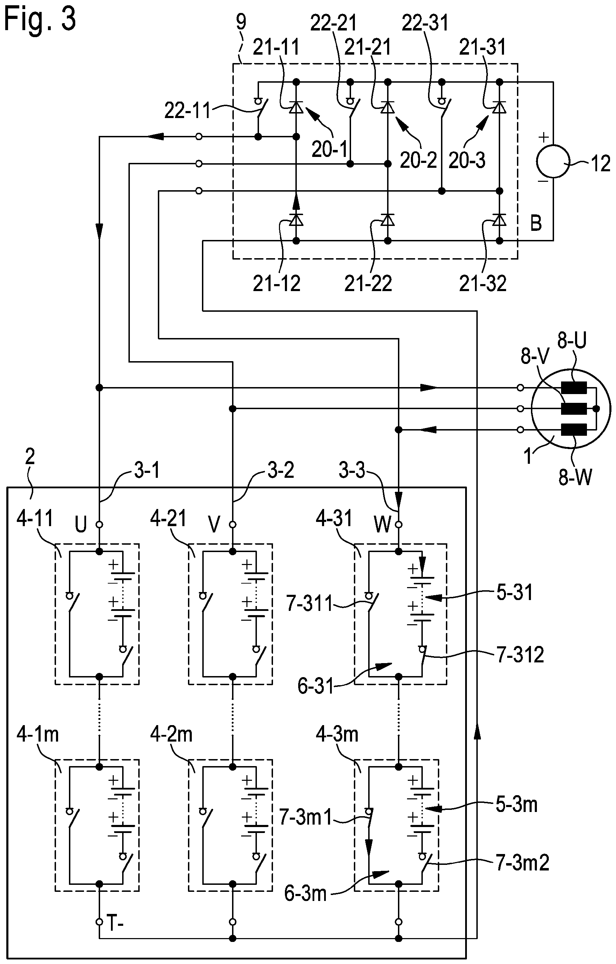

In einer der Ladephase folgenden Freilaufphase, welche in Fig. 3 dargestellt ist, wird die Koppeleinheit 6-31, welche den zu ladenden Energiespeicherzellen 5-31 zugeordnet ist, weiterhin derart gesteuert, dass die zugeordneten Energiespeicherzellen 5-31 in den Energieversorgungszweig 3-3 geschaltet werden. Alle übrigen Koppeleinheiten 6-32 bis 6-3m, welche in dem Energieversorgungszweig 3-3 der zu ladenden Energiespeicherzellen 5-31 liegen, die selbst aber keinen zu ladenden Energiespeicherzellen zugeordnet sind, werden weiterhin derart gesteuert, dass die jeweils zugeordneten Energiespeicherzellen überbrückt werden. Die Koppeleinheiten 6-11 bis 6-1m und 6-21 bis 6-2m in den übrigen Energieversorgungszweigen 3-1 und 3-2 werden weiterhin derart gesteuert, dass die jeweiligen Energieversorgungszweige 3-1 und 3-2 unterbrochen werden. Die High-Side-Schalter 22-11, 22-21 und 22-31 der Gleichrichtereinheit werden während der Freilaufphase geöffnet.

Eine derartige Steuerung der Koppeleinheiten 6 und der Highside-Schalter 22 der Gleichrichtereinheit 12 erzeugt einen geschlossenen Stromkreis zwischen den Statorwicklungen 8-U, 8-W und den zu ladenden Energiespeicherzellen 5-31. Die Induktivität der Statorwicklungen 8 treibt dabei den Strom weiter und lädt auf diese Weise die Energiespeicherzellen 5-31 auf. Der entsprechende Stromfluss ist in Figur 3 wiederum durch Pfeile gekennzeichnet.

Das zur Ladung der Energiespeicherzellen 5-31 notwendige Tiefsetzverhältnis wird über die impulsförmige Ansteuerung des High-Side-Schalters 22-11 eingestellt.

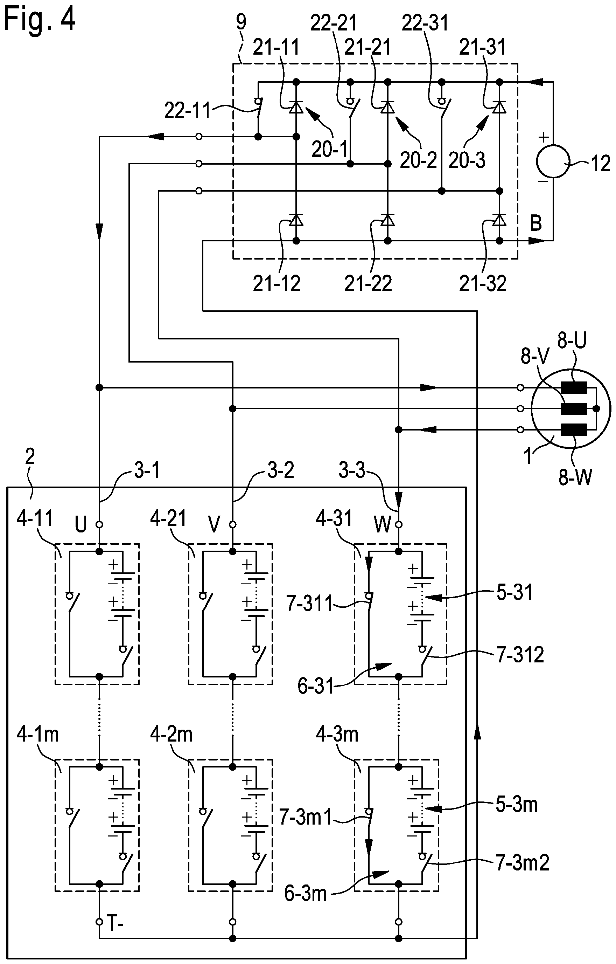

Es sei nun angenommen, dass ein Spannungsniveau im Gleichspannungszwischenkreis 10 niedriger ist als das Spannungsniveau der zu ladenden Energiespeicherzellen 5-31. In diesem Fall werden während einer Ladephase, welche in Fig. 4 dargestellt ist, alle Koppeleinheiten 6-31 bis 6-3m, welche in dem Energieversorgungszweig 3-3 der zu ladenden Energiespeicherzellen 5-31 liegen, derart gesteuert, dass die jeweils zugeordneten Energiespeicherzellen 5-31 bis 5-3m überbrückt werden. Alle sonstigen Koppeleinheiten 6, das heißt alle Koppeleinheiten 6 in den Energiespeichermodulen 4 der anderen beiden Energieversorgungszweige 3-1 und 3-2 werden derart gesteuert, dass die jeweiligen Energieversorgungszweige 3-1 bzw. 3-2 unterbrochen werden. Mindestens ein High-Side-Schalter 22 der Gleichrichtereinheit 12, welcher in einem Gleichrichterzweig angeordnet ist, der mit einem Energieversorgungszweig 3 des steuerbaren Energiespeichers 2 verbunden ist, der keine zu ladenden Energiespeicherzellen 5 aufweist, wird während der Ladephase geschlossen. Beispielhaft ist in Figur 4 der High-Side-Schalter 22-11 geschlossen.

Eine derartige Ansteuerung der Koppeleinheiten 6 und der High-Side-Schalter 22 bewirkt einen Stromfluss durch die Statorwicklungen 8-U und 8-W, so dass während der Ladephase elektrische Energie in den Statorwicklungen 8-U und 8-W gespeichert wird. Dieser Stromfluss ist in Figur 4 wiederum durch entsprechende Pfeile gekennzeichnet.

Während einer der Ladephase folgenden Freilaufphase werden die Koppeleinheiten 6 und Schaltelemente 22 der Gleichrichtereinheit weitgehend analog zu der anhand von Figur 3 erläuterten Situation mit einem Spannungsniveau im Gleichspannungszwischenkreis 10, welches über dem Spannungsniveau der zu ladenden Energiespeicherzellen 5-31 liegt, gesteuert. Der einzige Unterschied zu der in Figur 3 dargestellten Freilaufphase besteht darin, dass der High-Side-Schalter 22-11 diemal auch in der Freilaufphase geschlossen bleibt. Um Wiederholungen zu vermeiden, wird bezüglich der Steuerung der übrigen Schaltelemente 22 und der Koppeleinheiten 6 während der Freilaufphase auf die entsprechenden Ausführungen zu Figur 3 verwiesen.

Das zur Ladung der Energiespeicherzellen 5-31 notwendige Hochsetzverhältnis wird in diesem Fall über die impulsförmige Ansteuerung der Koppeleinheit 6-31 eingestellt, welche den zu ladenden Energiespeicherzellen zugeordnet ist.

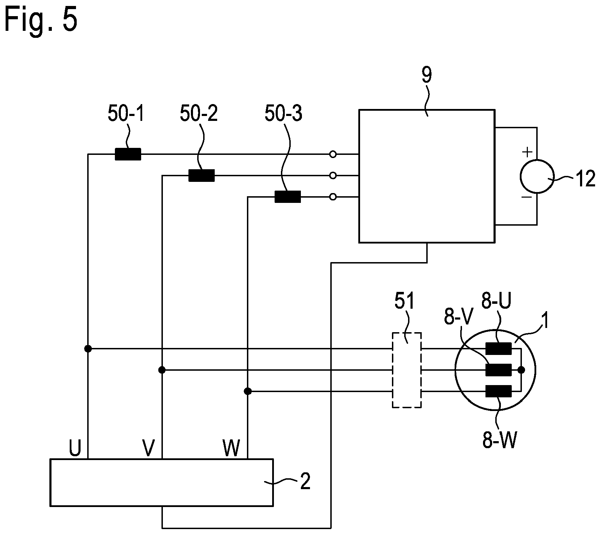

Reichen die Motorinduktivitäten nicht aus, können zusätzliche externe Ladeinduktivitäten 50-1, 50-2 und 50-3 eingesetzt werden, welche zwischen die Gleichrichtereinheit 12 und die elektrische Maschine 1 bzw. den steuerbaren Energiespeicher 2 geschaltet werden (Fig. 5). Ist zusätzlich eine Trenneinheit 51 vorhanden, durch welche die elektrische Maschine 1 während eines Ladevorgangs von dem steuerbaren Energiespeicher 2 abgetrennt werden kann, so können die Ladeinduktivitäten 50-1, 50-2 und 50-3 auch unabhängig von den Statorwicklungen 8-U, 8-V und 8-W zur Ladung der Energiespeicherzellen 5 genutzt werden. Dies ermöglicht dann auch die gleichzeitige Ladung von Energiespeicherzellen 5 in allen Energieversorgungszweigen 3-1, 3-2 und 3-3.

Außerdem ermöglichen es die zusätzlichen Ladeinduktivitäten 50-1, 50-2 und 50-3 sowie die Trenneinheit 51, dass bei den anhand der Figuren 2 bis 4 erläuterten Ladeverfahren in der Ladephase ein beliebiger steuerbarer High-Side-Schalter der steuerbaren bidirektionalen Gleichrichtereinheit geschlossen werden kann.

Unerwünschte Momente während des Ladevorgangs können dadurch vermieden werden, dass die elektrische Maschine 1 während des Ladevorgangs mechanisch blockiert wird, z.B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

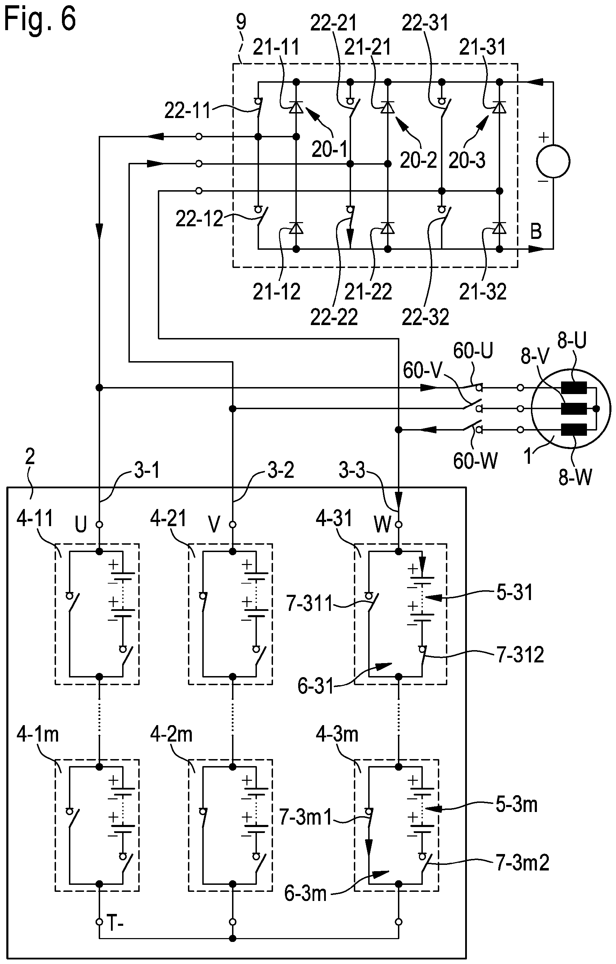

Denkbar ist auch ein Ladesystem und ein Verfahren zu dessen Betrieb, welches ohne externen Rückleiter, das heißt ohne eine elektrische Verbindung zwischen der Bezugsschiene T- des steuerbaren Energiespeichers 2 und der Bezugsschiene B des Gleichspannungszwischenkreises 10, auskommt. In diesem Fall wird ein Rückflusszweig für den Stromfluss während des Ladevorgangs durch einen Energieversorgungszweig 3 des steuerbaren Energiespeichers 2 gebildet, welcher selbst keine zu ladenden Energiespeicherzellen 5 aufweist. Dafür ist aber in mindestens zwei der Verbindungsleitungen zwischen dem steuerbaren Energiespeicher 2 und der elektrischen Maschine 1 jeweils ein zusätzliches steuerbares Schaltelement 60-U bzw. 60-V bzw. 60-W vorzusehen, welches eine Abkopplung des Rückflusszweiges von den Statorwicklungen 8-U, 8-V bzw. 8-W ermöglicht. Dies ist erforderlich, da der Sternpunkt der elektrischen Maschine 1 ansonsten auf Masse gezogen wird, was zu einem Kurzschluss führen würde. Zusätzlich sind in der Gleichrichtereinheit 12 zumindest in denjenigen Gleichrichterzweigen 20, welche mit denjenigen Verbindungsleitungen verbunden sind, welche die zusätzlichen Schaltelemente aufweisen, Low-Side-Schalter 22-12, 22-22 und 22-32 vorzusehen. In Fig. 6 ist eine Ladephase für ein derartiges Ladesystem dargestellt. Die Freilaufphase verläuft analog zu den Ausführungen zu Fig. 3.

## Patentansprüche

1. System zum Laden mindestens einer Energiespeicherzelle (5) in einem steuerbaren Energiespeicher (2), welcher der Steuerung und der elektrischen Energieversorgung einer n-phasigen elektrischen Maschine (1), mit n ≥ 1, dient, wobei
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbunden sind und
▪ andererseits mit jeweils einer Phase (U, V, W) der elektrischen Maschine (1) verbindbar sind,
- die Koppeleinheiten (6) in Abhängigkeit von Steuersignalen durch Öffnen eines ersten Schaltelements (7-311, 7-3m1) und eines zweiten Schaltelements (7-312, 7-31m) der zugeordneten steuerbaren Koppeleinheit (6, 6-31, 6-3m) den jeweiligen Energieversorgungszweig (3-1, 3-2; 3-3) unterbrechen oder die jeweils zugeordneten Energiespeicherzellen (5) durch Öffnen des zweiten Schaltelements (7-312, 7-3m2) der zugeordneten steuerbaren Koppeleinheit (6, 6-11, 6-3m) abkoppeln und dieses zweite Schaltelement (7-312, 7-3m2) und die zugeordneten Energiespeicherzellen in dem jeweiligen Energieversorgungszweig (3-1, 3-2, 3-3) durch Schließen des ersten Schaltelements (7-311, 7-3m1) überbrückt werden, oder durch Öffnen des ersten Schaltelements (7-311, 7-3m1) und durch Schließen des zweiten Schaltelements (7-312, 7-3m2) der zugeordneten steuerbaren Koppeleinheit (6, 6-31, 6-3m) die jeweils zugeordneten Energiespeicherzellen (5) in den jeweiligen Energieversorgungszweig (3-1, 3-2; 3-3) schalten,
- die Energieversorgungszweige (3-1, 3-2, 3-3) des steuerbaren Energiespeichers (2) und die Phasen (U, V, W) der elektrischen Maschine (1) über eine steuerbare n-phasige bidirektionale Gleichrichtereinheit (9) mit einem Gleichspannungszwischenkreis (10) verbunden sind,
- die Bezugsschiene (T-) des steuerbaren Energiespeichers (2) mit einer Bezugsschiene (B) des Gleichspannungszwischenkreises (10) verbunden ist und
- der Gleichspannungszwischenkreis (10) elektrisch mit einer Ladeeinrichtung (12) verbunden ist,
**dadurch gekennzeichnet, dass** die steuerbare bidirektionale Gleichrichtereinheit (9) ein steuerbarer n-phasiger Brückengleichrichter ist, welcher mindestens einen steuerbaren High-Side-Schalter aufweist, welcher in einem Gleichrichterzweig angeordnet ist, der mit einem Energieversorgungszweig (3-1, 3-2, 3-3) des steuerbaren Energiespeichers (2) verbunden ist, der keine zu ladenden Energiespeicherzellen (5) aufweist, wobei der mindestens eine High-Side-Schalter des Brückengleichrichters zusammen mit den Statorwicklungen der elektrischen Maschine (1) während eines Ladevorgangs analog zu einem Tiefsetzsteller und/oder die Koppeleinheiten (6), welche zu ladenden Energiespeicherzellen (5) zugeordnet sind, zusammen mit den Statorwicklungen der elektrischen Maschine (1) während eines Ladevorgangs analog zu einem Hochsetzsteller betreibbar sind, wobei den Statorwicklungen der elektrischen Maschine (1) Energie zuführbar und dort speicherbar ist.

2. System nach Anspruch 1, wobei die Gleichrichtereinheit (9) n parallele Gleichrichterzweige (20-1, 20-2, 20-3) umfasst, welche mit jeweils einem Energieversorgungszweig (3-1; 3-2; 3-3) und der zugehörigen Phase (U; V; W) der elektrischen Maschine (1) verbindbar sind und welche jeweils mindestens einen steuerbaren High-Side-Schalter (22-11; 22-21; 22-31) aufweisen.

3. System nach einem der Ansprüche 1 bis 2, wobei zwischen die Gleichrichtereinheit (9) und den steuerbaren Energiespeicher (2) zusätzliche Ladeinduktivitäten (50-1, 50-2, 50-3) geschaltet sind.

4. System nach Anspruch 3, wobei eine Trenneinheit (51) vorgesehen ist, durch welche die elektrische Maschine (1) während eines Ladevorgangs von dem steuerbaren Energiespeicher (2) abgetrennt werden kann.

5. Verfahren zum Betrieb eines Ladesystems gemäß einem der Ansprüche 2 oder 3, **dadurch gekennzeichnet, dass**
- eine Ladeeinrichtung (12) an den Gleichspannungszwischenkreis (10) angeschlossen wird, wobei ein Spannungsniveau im Gleichspannungszwischenkreis (10) höher ist als das Spannungsniveau der zu ladenden Energiespeicherzellen (5-31),
- in einer Ladephase elektrische Energie in Statorwicklungen (8-U, 8-V, 8-W) der elektrischen Maschine (1) gespeichert wird, indem
▪ alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) durch einen Schalter der zugeordneten steuerbaren Koppeleinheit (6-32 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ mindestens ein steuerbarer High-Side-Schalter (22-11) der steuerbaren bidirektionalen Gleichrichtereinheit (9), welcher in einem Gleichrichterzweig (20-1) angeordnet ist, der mit einem Energieversorgungszweig (3-1) des steuerbaren Energiespeichers (2) verbunden ist, der keine zu ladenden Energiespeicherzellen (5) aufweist, geschlossen wird,
- in einer der Ladephase folgenden Freilaufphase
▪ alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) durch einen Schalter der zugeordneten steuerbaren Koppeleinheit (6-32 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ die steuerbaren High-Side-Schalter (22-11, 22-21, 22-31) der steuerbaren bidirektionalen Gleichrichtereinheit (9) geöffnet werden.

6. Verfahren zum Betrieb eines Ladesystems gemäß Anspruch 4, **dadurch gekennzeichnet, dass**
- eine Ladeeinrichtung (12) an den Gleichspannungszwischenkreis (10) angeschlossen wird, wobei ein Spannungsniveau im Gleichspannungszwischenkreis (10) höher ist als das Spannungsniveau der zu ladenden Energiespeicherzellen (5-31),
- in einer Ladephase elektrische Energie in Statorwicklungen (8-U, 8-V, 8-W) der elektrischen Maschine (1) gespeichert wird, indem
▪ alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) durch einen Schalter der zugeordneten steuerbaren Koppeleinheit (6-32 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ mindestens ein steuerbarer High-Side-Schalter (22-11) der steuerbaren bidirektionalen Gleichrichtereinheit (9) geschlossen wird,
- in einer der Ladephase folgenden Freilaufphase
▪ alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) durch einen Schalter der zugeordneten steuerbaren Koppeleinheit (6-32 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ die steuerbaren High-Side-Schalter (22-11, 22-21, 22-31) der steuerbaren bidirektionalen Gleichrichtereinheit (9) geöffnet werden.

7. Verfahren zum Betrieb eines Ladesystems gemäß einem der Ansprüche 2 oder 3, **dadurch gekennzeichnet, dass**
- eine Lädeeinrichtung (12) an den Gleichspannungszwischenkreis (10) angeschlossen wird, wobei ein Spannungsniveau im Gleichspannungszwischenkreis (10) niedriger ist als das Spannungsniveau der zu ladenden Energiespeicherzellen (5-31),
- in einer Ladephase elektrische Energie in Statorwicklungen (8-U, 8-V, 8-W) der elektrischen Maschine (1) gespeichert wird, indem
▪ alle Koppeleinheiten (6-31 bis 6-3m), welche in dem Energieversorgungszweig (3-3) von zu ladenden Energiespeicherzellen (5-31) liegen, derart gesteuert werden, dass die jeweils zugeordneten Energiespeicherzellen (5-31 bis 5-3m) durch einen Schalter der zugeordneten steuerbaren Koppeleinheit (6-31 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ mindestens ein steuerbarer High-Side-Schalter (22-11) der steuerbaren bidirektionalen Gleichrichtereinheit (9), welcher in einem Gleichrichterzweig (20-1) angeordnet ist, der mit einem Energieversorgungszweig (3-1) des steuerbaren Energiespeichers (2) verbunden ist, der keine zu ladenden Energiespeicherzellen (5) aufweist, geschlossen wird,
- in einer der Ladephase folgenden Freilaufphase
▪ alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) durch einen Schalter der zugeordneten steuerbaren Koppeleinheit (6-32 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ die steuerbaren High-Side-Schalter (22-11, 22-21, 22-31) der steuerbaren bidirektionalen Gleichrichtereinheit (9) geschlossen werden.

8. Verfahren zum Betrieb eines Ladesystems gemäß Anspruch 4, **dadurch gekennzeichnet, dass**
- eine Ladeeinrichtung (12) an den Gleichspannungszwischenkreis (10) angeschlossen wird, wobei ein Spannungsniveau im Gleichspannungszwischenkreis (10) niedriger ist als das Spannungsniveau der zu ladenden Energiespeicherzellen (5-31),
- in einer Ladephase elektrische Energie in Statorwicklungen (8-U, 8-V, 8-W) der elektrischen Maschine (1) gespeichert wird, indem
▪ alle Koppeleinheiten (6-31 bis 6-3m), welche in dem Energieversorgurigszweig (3-3) von zu ladenden Energiespeicherzellen (5-31) liegen, derart gesteuert werden, dass die jeweils zugeordneten Energiespeicherzellen (5-31 bis 5-3m) durch einen Schalter der zugeordneten steuerbaren Koppeleinheit (6-31 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ mindestens ein steuerbarer High-Side-Schalter (22-11) der steuerbaren bidirektionalen Gleichrichtereinheit (9) geschlossen wird,
- in einer der Ladephase folgenden Freilaufphase
▪ alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
▪ alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5) zugeordnet sind, derart gesteuert werden, dass die jeweils zugeordneten Energiespeicherzellen (5-32 bis 5-3m) durch einen Schalter der zugeordneten steuerbaren Koppeleinheit (6-32 bis 6-3m) isoliert werden und dieser Schalter in dem Energieversorgungszweig (3-3) überbrückt wird,
▪ alle übrigen Koppeleinheiten (6) derart gesteuert werden, dass die jeweiligen Energieversorgungszweige (3-1, 3-2) unterbrochen werden, und
▪ die steuerbaren High-Side-Schalter (22-11, 22-21, 22-31) der steuerbaren bidirektionalen Gleichrichtereinheit (9) geschlossen werden.

## Claims

1. System for charging at least one energy storage cell (5) in a controllable energy store (2) used for controlling and supplying electric power to an n-phase electrical machine (1), where n ≥ 1, wherein
- the controllable energy store (2) has n parallel energy supply parts (3-1, 3-2, 3-3) that
• each have at least two series-connected energy storage modules (4) that each comprise at least one electrical energy storage cell (5) having an associated controllable coupling unit (6),
• are firstly connected to a reference rail (T-) and
• are secondly connectable to a respective phase (U, V, W) of the electrical machine (1),
- the coupling units (6) take control signals as a basis for opening a first switching element (7-311, 7-3m1) and a second switching element (7-312, 7-31m) of the associated controllable coupling unit (6, 6-31, 6-3m) to interrupt the respective energy supply path (3-1, 3-2, 3-3) or decouple the respective associated energy storage cells (5) by opening the second switching element (7-312, 7-3m2) of the associated controllable coupling unit (6, 6-11, 6-3m), and this second switching element (7-312, 7-3m2) and the associated energy storage cells in the respective energy supply path (3-1, 3-2, 3-3) are bypassed by closing the first switching element (7-311, 7-3m1), or open the first switching element (7-311, 7-3m1) and close the second switching element (7-312, 7-3m2) of the associated controllable coupling unit (6, 6-31, 6-3m) to connect the respectively associated energy storage cells (5) into the respective energy supply path (3-1, 3-2; 3-3),
- the energy supply paths (3-1, 3-2, 3-3) of the controllable energy store (2) and the phases (U, V, W) of the electrical machine (1) are connected to a DC link circuit (10) via a controllable n-phase bidirectional rectifier unit (9),
- the reference rail (T-) of the controllable energy store (2) is connected to a reference rail (B) of the DC link circuit (10), and
- the DC link circuit (10) is electrically connected to a charging device (12), **characterized in that** the controllable bidirectional rectifier unit (9) is a controllable n-phase bridge rectifier that has at least one controllable high-side switch arranged in a rectifier path connected to an energy supply path (3-1, 3-2, 3-3) of the controllable energy store (2) that has no energy storage cells (5) to be charged, wherein the at least one high-side switch of the ' bridge rectifier, together with the stator windings of the electrical machine (1), are operable analogously to a step-down converter during a charging process and/or the coupling units (6) associated with energy storage cells (5) to be charged, together with the stator windings of the electrical machine (1), are operable analogously to a step-up converter during a charging process, wherein energy is supplyable to and storable in the stator windings of the electrical machine (1).

2. System according to Claim 1, wherein the rectifier unit (9) comprises n parallel rectifier paths (20-1, 20-2, 20-3) that are connectable to a respective energy supply path (3-1; 3-2; 3-3) and the associated phase (U; V; W) of the electrical machine (1) and that each have at least one controllable high-side switch (22-11; 22-21; 22-31).

3. System according to either of Claims 1 and 2, wherein the rectifier unit (9) and the controllable energy store (2) have additional charging inductances (50-1, 50-2, 50-3) connected between them.

4. System according to Claim 3, wherein an isolating unit (51) is provided that can isolate the electrical machine (1) from the controllable energy store (2) during a charging process.

5. Method for operating a charging system according to either of Claims 2 and 3, **characterized in that**
- a charging device (12) is connected to the DC link circuit (10), wherein a voltage level in the DC link circuit (10) is higher than the voltage level of the energy storage cells (5-31) to be charged,
- electrical energy is stored in stator windings (8-U, 8-V, 8-W) of the electrical machine (1) in a charging phase by virtue of
• all coupling units (6-31) associated with energy storage cells (5-31) to be charged being controlled such that the respectively associated energy storage cells (5-31) are connected into the energy supply path (3-3),
• all coupling units (6-32 to 6-3m) that are in the energy supply path (3-3) of energy storage cells (5-31) to be charged that are themselves not associated with energy storage cells (5) to be charged being controlled such that the respectively associated energy storage cells (5-32 to 5-3m) are isolated by a switch of the associated controllable coupling unit (6-32 to 6-3m) and this switch is bypassed in the energy supply path (3-3),
• all other coupling units (6) being controlled such that the respective energy supply paths (3-1, 3-2) are interrupted, and
• at least one controllable high-side switch (22-11) of the controllable bidirectional rectifier unit (9), which high-side switch is arranged in a rectifier path (20-1) connected to an energy supply path (3-1) of the controllable energy store (2) that has no energy storage cells (5) to be charged, being closed,
- in a freewheeling phase following the charging phase
• all coupling units (6-31) associated with energy storage cells (5-31) to be charged are controlled such that the respectively associated energy storage cells (5-31) are connected to the energy supply path (3-3),
• all coupling units (6-32 to 6-3m) that are in the energy supply path (3-3) of energy storage cells (5-31) to be charged that are themselves not associated with energy storage cells (5) to be charged are controlled such that the respectively associated energy storage cells (5-32 to 5-3m) are isolated by a switch of the associated controllable coupling unit (6-32 to 6-3m) and this switch is bypassed in the energy supply path (3-3),
• all other coupling units (6) are controlled such that the respective energy supply paths (3-1, 3-2) are interrupted, and
• the controllable high-side switches (22-11, 22-21, 22-31) of the controllable bidirectional rectifier unit (9) are opened.

6. Method for operating a charging system according to Claim 4, **characterized in that**
- a charging device (12) is connected to the DC link circuit (10), wherein a voltage level in the DC link circuit (10) is higher than the voltage level of the energy storage cells (5-31) to be charged,
- electrical energy is stored in stator windings (8-U, 8-V, 8-W) of the electrical machine (1) in a charging phase by virtue of
• all coupling units (6-31) associated with energy storage cells (5-31) to be charged being controlled such that the respectively associated energy storage cells (5-31) are connected into the energy supply path (3-3),
• all coupling units (6-32 to 6-3m) that are in the energy supply path (3-3) of energy storage cells (5-31) to be charged that are themselves not associated with energy storage cells (5) to be charged being controlled such that the respectively associated energy storage cells (5-32 to 5-3m) are isolated by a switch of the associated controllable coupling unit (6-32 to 6-3m) and this switch is bypassed in the energy supply path (3-3),
• all other coupling units (6) being controlled such that the respective energy supply paths (3-1, 3-2) are interrupted, and
• at least one controllable high-side switch (22-11) of the controllable bidirectional rectifier unit (9) being closed,
- in a freewheeling phase following the charging phase
• all coupling units (6-31) associated with energy storage cells (5-31) to be charged are controlled such that the respectively associated energy storage cells (5-31) are connected into the energy supply path (3-3),
• all coupling units (6-31 to 6-3m) that are in the energy supply path (3-3) of energy storage cells (5-31) to be charged that are themselves not associated with the energy storage cells (5) to be charged are controlled such that the respectively associated energy storage cells (5-32 to 5-3m) are isolated by a switch of the associated controllable coupling unit (6-32 to 6-3m) and this switch is bypassed in the energy supply path (3-3),
• all other coupling units (6) are controlled such that the respective energy supply paths (3-1, 3-2) are interrupted, and
• the controllable high-side switches (22-11, 22-21, 22-31) of the controllable bidirectional rectifier unit (9) are opened.

7. Method for operating a charging system according to either of Claims 2 and 3, **characterized in that**
- a charging device (12) is connected to the DC link circuit (10), wherein a voltage level in the DC link circuit (10) is lower than the voltage level of the energy storage cells (5-31) to be charged,
- electrical energy is stored in stator windings (8-U, 8-V, 8-W) of the electrical machine (1) in a charging phase by virtue of
• all coupling units (6-31 to 6-3m) that are in the energy supply path (3-3) of energy storage cells (5-31) to be charged being controlled such that the respectively associated energy storage cells (5-31 to 5-3m) are isolated by a switch of the associated controllable coupling unit (6-31 to 6-3m) and this switch is bypassed in the energy supply path (3-3),
• all other coupling units (6) being controlled such that the respective energy supply paths (3-1, 3-2) are interrupted, and
• at least one controllable high-side switch (22-11) of the controllable bidirectional rectifier unit (9), which high-side switch is arranged in a rectifier path (20-1) connected to an energy supply path (3-1) of the controllable energy store (2) that has no energy storage cells (5) to be charged, being closed,
- in a freewheeling phase following the charging phase
• all coupling units (6-31) associated with energy storage cells (5-31) to be charged are controlled such that the respectively associated energy storage cells (5-31) are connected to the energy supply path (3-3),
• all coupling units (6-32 to 6-3m) that are in the energy supply path (3-3) of energy storage cells (5-31) to be charged that are themselves not associated with energy storage cells (5) to be charged are controlled such that the respectively associated energy storage cells (5-32 to 5-3m) are isolated by a switch of the associated coupling unit (6-32 to 6-3m) and this switch is bypassed in the energy supply path (3-3),
• all other coupling units (6) are controlled such that the respective energy supply paths (3-1, 3-2) are interrupted, and
• the controllable high-side switches (22-11, 22-21, 22-31) of the controllable bidirectional rectifier unit (9) are closed.

8. Method for operating a charging system according to Claim 4, **characterized in that**
- a charging device (12) is connected to the DC link circuit (10), wherein a voltage level in the DC link circuit (10) is lower than the voltage level of the energy storage cells (5-31) to be charged,
- electrical energy is stored in stator windings (8-U, 8-V, 8-W) of the electrical machine (1) in a charging phase by virtue of
• all coupling units (6-31 to 6-3m) that are in the energy supply path (3-3) of energy storage cells (5-31) to be charged being controlled such that the respectively associated energy storage cells (5-31 to 5-3m) are isolated by a switch of the associated controllable coupling unit (6-31 to 6-3m) and this switch is bypassed in the energy supply path (3-3),
• all other coupling units (6) being controlled such that the respective energy supply paths (3-1, 3-2) are interrupted, and
• at least one controllable high side switch (22-11) of the controllable bidirectional rectifier unit (9) being closed,
- in a freewheeling phase following the charging phase
• all coupling units (6-31) associated with energy storage cells (5-31) to be charged are controlled such that the respectively associated energy storage cells (5-31) are connected into the energy supply path (3-3),
• all coupling units (6-32 to 6-3m) that are in the energy supply path (3-3) of energy storage cells (5-31) to be charged that are themselves not associated with energy storage cells (5) to be charged are controlled such that the respectively associated energy storage cells (5-32 to 5-3m) are isolated by a switch of the associated controllable coupling unit (6-32 to 6-3m) and this switch is bypassed in the energy supply path (3-3),
• all other coupling units (6) are controlled such that the respective energy supply paths (3-1, 3-2) are interrupted, and
• the controllable high-side switches (22-11, 22-21, 22-31) of the controllable bidirectional rectifier unit (9) are closed.

## Revendications

1. Système, destiné à charger au moins une cellule accumulatrice d'énergie (5) dans un accumulateur d'énergie (2) susceptible d'être commandé, lequel sert à la commande et à l'alimentation en énergie électrique d'une machine électrique (1) à n phases, avec n ≥ 1,
- l'accumulateur d'énergie (2) susceptible d'être commandé comportant n branches d'alimentation d'énergie (3-1, 3-2, 3-3) parallèles, lesquelles
▪ comportent chacune au moins deux modules accumulateurs d'énergie (4) montés en série, lesquels comprennent chacun au moins une cellule accumulatrice d'énergie électrique (5), pourvue d'une unité de couplage (6) associée, susceptible d'être commandée,
▪ sont reliées d'une part avec un rail de référence (T-) et
▪ sont susceptibles d'être reliées d'autre part avec chaque fois une phase (U, V, W) de la machine électrique (1),
- en fonction de signaux de commande, par ouverture d'un premier élément de commutation (7-311, 7-3m1) et d'un deuxième élément de commutation (7-312, 7-31m) de l'unité de couplage (6, 6-31, 6-3m) associée, susceptible d'être commandée, les unités de couplage (6) interrompant la branche d'alimentation d'énergie (3-1, 3-2 ; 3-3) respective ou désaccouplant les cellules accumulatrices d'énergie (5) respectivement associées par ouverture du deuxième élément de commutation (7-312, 7-3m2) de l'unité de couplage (6, 6-11, 6-3m) associée, susceptible d'être commandée et ledit deuxième élément de commutation (7-312, 7-3m2) et les cellules accumulatrices d'énergie associées étant shuntées dans la branche d'alimentation d'énergie (3-1, 3-2, 3-3) respective par fermeture du premier élément de commutation (7-311, 7-3m1) ou par ouverture du premier élément de commutation (7-311, 7-3m1) et par fermeture du deuxième élément de commutation (7-312, 7-3m2) de l'unité de couplage (6, 6-31, 6-3m) associée, susceptible d'être commandée, commutant les cellules accumulatrices d'énergie (5) respectivement associées dans la branche d'alimentation d'énergie (3-1, 3-2 ; 3-3) respective,
- les branches d'alimentation d'énergie (3-1, 3-2, 3-3) de l'accumulateur d'énergie (2) susceptible d'être commandé et les phases (U, V, W) de la machine électrique (1) étant reliées par l'intermédiaire d'un module redresseur (9) bidirectionnel à n phases, susceptible d'être commandé avec un circuit intermédiaire à tension continue (10),
- le rail de référence (T-) de l'accumulateur d'énergie (2) susceptible d'être commandé étant relié avec un rail de référence (B) du circuit intermédiaire à tension continue (10) et
- le circuit intermédiaire à tension continue (10) étant électriquement relié avec un dispositif chargeur (12),
**caractérisé en ce que** le module redresseur (9) bidirectionnel, susceptible d'être commandé est un pont redresseur susceptible d'être commandé, à n phases, lequel comporte au moins un interrupteur high side susceptible d'être commandé, lequel est placé dans une branche du redresseur qui est reliée avec une branche d'alimentation d'énergie (3-1, 3-2, 3-3) de l'accumulateur d'énergie (2) susceptible d'être commandé qui ne comporte pas des cellules accumulatrices d'énergie (5) qui doivent être chargées, l'au moins un interrupteur high side du pont redresseur pouvant être actionné conjointement avec les enroulements statoriques de la machine électrique (1) pendant un processus de charge, en analogie à un convertisseur-abaisseur et/ou les unités de couplage (6), lesquelles sont associées à des cellules accumulatrices d'énergie (5) qui doivent être chargées pouvant être actionnées conjointement aux enroulements statoriques de la machine électrique (1) pendant un processus de charge, en analogie à un convertisseur-élévateur, de l'énergie pouvant être amenée aux enroulements statoriques de la machine électrique (1) et y être accumulée.

2. Système selon la revendication 1, le module redresseur (9) comprenant n branches de redresseur (20-1, 20-2, 20-3) parallèles, lesquelles sont susceptibles d'être reliées avec respectivement une branche d'alimentation d'énergie (3-1 ; 3-2 ; 3-3) et avec la phase (U ; V ; W) correspondante de la machine électrique (1) et lesquelles comportent chacune un interrupteur high side (22-11 ; 22-21 ; 22-31) susceptible d'être commandé.

3. Système selon l'une quelconque des revendications 1 à 2, entre le module redresseur (9) et l'accumulateur d'énergie (2) susceptible d'être commandé étant commutées des inductances de charge (50-1, 50-2, 50-3) supplémentaires.

4. Système selon la revendication 3, une unité de séparation (51) étant prévue, par laquelle pendant un processus de charge, la machine électrique (1) peut être isolée de l'accumulateur d'énergie (2).

5. Procédé, destiné à faire fonctionner un système de charge selon l'une quelconque des revendications 2 ou 3, **caractérisé**
- **en ce qu'**un dispositif chargeur (12) est connecté sur le circuit intermédiaire à tension continue (10), un niveau de tension dans le circuit intermédiaire à tension continue (10) étant plus élevé que le niveau de tension des cellules accumulatrices d'énergie (5-31) qui doivent être chargées,
- **en ce qu'**au cours d'une phase de charge, de l'énergie électrique est accumulée dans des enroulements statoriques (8-U, 8-V, 8-W) de la machine électrique (1) en ce que
▪ toutes les unités de couplage (6-31) lesquelles sont associées à des cellules accumulatrices d'énergie (5-31) qui doivent être chargées sont commandées de telle sorte que les cellules accumulatrices d'énergie (5-31) respectivement associées soient commutées dans la branche d'alimentation d'énergie (3-3),
▪ toutes les unités de couplage (6-32 à 6-3m), lesquelles se situent dans la branche d'alimentation d'énergie (3-3) de cellules accumulatrices d'énergie (5-31) qui doivent être chargées, qui ne sont toutefois pas associées elles-mêmes à des cellules accumulatrices d'énergie (5) qui doivent être chargées sont commandées de telle sorte que les cellules accumulatrices d'énergie (5-32 à 5-3m) respectivement associées soient isolées par un interrupteur de l'unité de couplage (6-32 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ en ce qu'on ferme au moins un interrupteur high side (22-11) susceptible d'être commandé du module redresseur (9) bidirectionnel, susceptible d'être commandé, lequel est placé dans une branche du redresseur (20-1) qui est reliée avec une branche d'alimentation d'énergie (3-1) de l'accumulateur d'énergie (2) susceptible d'être commandé qui ne comporte pas de cellules accumulatrices d'énergie (5),
- **en ce que** dans une phase de fonctionnement libre, consécutive à la phase de charge
▪ toutes les unités de couplage (6-31), lesquelles sont associées à des cellules accumulatrices d'énergie (5-31) qui doivent être chargées sont commandées de telle sorte que les cellules accumulatrices d'énergie (5-31) respectivement associées soient commutées dans la branche d'alimentation d'énergie (3-3),
▪ toutes les unités de couplage (6-32 à 6-3m), lesquelles se situent dans la branche d'alimentation d'énergie (3-3) de cellules accumulatrices d'énergie (5-31) qui doivent être chargées, qui ne sont toutefois pas associées elles-mêmes à des cellules accumulatrices d'énergie (5) qui doivent être chargées sont commandées de telle sorte que les cellules accumulatrices d'énergie (5-32 à 5-3m) respectivement associées soient isolées par un interrupteur de l'unité de couplage (6-32 à 6-3m) susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues, et
▪ on ouvre les interrupteurs high side (22-11, 22-21, 22-31) du module redresseur (9) bidirectionnel, susceptible d'être commandés.

6. Procédé, destiné à faire fonctionner un système de charge selon la revendication 4, **caractérisé**
- **en ce qu'**un dispositif chargeur (12) est connecté sur le circuit intermédiaire à tension continue (10), un niveau de tension dans le circuit intermédiaire à tension continue (10) étant plus élevé que le niveau de tension des cellules accumulatrices d'énergie (5-31) qui doivent être chargées,
- **en ce que** dans une phase de charge, de l'énergie électrique est accumulée dans des enroulements statoriques (8-U, 8-V, 8-W) de la machine électrique (1) en ce que
▪ toutes les unités de couplage (6-31), lesquelles sont associées à des cellules accumulatrices d'énergie (5-31) qui doivent être chargées sont commandées de telle sorte que les cellules accumulatrices d'énergie (5-31) respectivement associées soient commutées dans la branche d'alimentation d'énergie (3-3),
▪ toutes les unités de couplage (6-32 à 6-3m), lesquelles se situent dans la branche d'alimentation d'énergie (3-3) de cellules accumulatrices d'énergie (5-31) qui doivent être chargées, qui ne sont toutefois pas associées elles-mêmes à des cellules accumulatrices d'énergie (5) qui doivent être chargées sont commandées de telle sorte que les cellules accumulatrices d'énergie (5-32 à 5-3m) respectivement associées soient isolées par un interrupteur de l'unité de couplage (6-32 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ en ce qu'on ferme au moins un interrupteur high side (22-11) susceptible d'être commandé du module redresseur (9) bidirectionnel, susceptible d'être commandé,
- **en ce que** dans une phase de fonctionnement libre, consécutive à la phase de charge
▪ toutes les unités de couplage (6-31), qui sont associées à des cellules accumulatrices d'énergie (5-31) qui doivent être chargées sont commandées de telle sorte que les cellules accumulatrices d'énergie (5-31) respectivement associées soient commutées dans la branche d'alimentation d'énergie (3-3),
▪ toutes les unités de couplage (6-32 à 6-3m), lesquelles se situent dans la branche d'alimentation d'énergie (3-3) de cellules accumulatrices d'énergie (5-31) qui doivent être chargées, qui ne sont toutefois pas associées elles-mêmes à des cellules accumulatrices d'énergie (5) qui doivent être chargées sont commandées de telle sorte que les cellules accumulatrices d'énergie (5-32 à 5-3m) respectivement associées soient isolées par un interrupteur de l'unité de couplage (6-32 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ on ouvre les interrupteurs high side (22-11, 22-21, 22-31) susceptibles d'être commandés du module redresseur (9) bidirectionnel, susceptible d'être commandé.

7. Procédé, destiné à faire fonctionner un système de charge selon la revendication 2 ou 3, **caractérisé**
- **en ce qu'**un dispositif chargeur (12) est connecté sur le circuit intermédiaire à tension continue (10), un niveau de tension dans le circuit intermédiaire à tension continue (10) étant plus élevé que le niveau de tension des cellules accumulatrices d'énergie (5-31) qui doivent être chargées,
- **en ce qu'**au cours d'une phase de charge, de l'énergie électrique est accumulée dans des enroulements statoriques (8-U, 8-V, 8-W) de la machine électrique (1) en ce que
▪ toutes les unités de couplage (6-31 à 6-3m), lesquelles se situent dans la branche d'alimentation d'énergie (3-3) de cellules accumulatrices d'énergie (5-31) qui doivent être chargées sont commandées de telle sorte que les cellules accumulatrices d'énergie (5-31 à 5-3m) respectivement associées soient isolées par un interrupteur de l'unité de couplage (6-31 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ on ferme au moins un interrupteur high side (22-11) susceptible d'être commandé du module redresseur (9) bidirectionnel, susceptible d'être commandé, lequel est placé dans une branche du redresseur (20-1) qui est connectée avec une branche d'alimentation d'énergie (3-1) de l'accumulateur d'énergie (2) susceptible d'être commandé, qui ne comporte pas de cellules accumulatrices d'énergie (5) qui doivent être chargées,
- **en ce que** dans une phase de fonctionnement libre, consécutive à la phase de charge
▪ toutes les unités de couplage (6-31), qui sont associées à des cellules accumulatrices d'énergie (5-31) qui doivent être chargées sont commandées de telle sorte que les cellules accumulatrices d'énergie (5-31) respectivement associées soient commutées dans la branche d'alimentation d'énergie (3-3),
▪ toutes les unités de couplage (6-32 à 6-3m), lesquelles se situent dans la branche d'alimentation d'énergie (3-3) de cellules accumulatrices d'énergie (5-31) qui doivent être chargées, qui ne sont toutefois pas associées elles-mêmes à des cellules accumulatrices d'énergie (5) qui doivent être chargées sont commandées de telle sorte que les cellules accumulatrices d'énergie (5-32 à 5-3m) respectivement associées soient isolées par un interrupteur de l'unité de couplage (6-32 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ on ferme les interrupteurs high side (22-11, 22-21, 22-31) susceptibles d'être commandés du module redresseur (9) bidirectionnel, susceptible d'être commandé.

8. Procédé, destiné à faire fonctionner un système de charge selon la revendication 4, **caractérisé**
- **en ce qu'**un dispositif chargeur (12) est connecté sur le circuit intermédiaire à tension continue (10), un niveau de tension dans le circuit intermédiaire à tension continue (10) étant plus élevé que le niveau de tension des cellules accumulatrices d'énergie (5-31) qui doivent être chargées,
- **en ce qu'**au cours d'une phase de charge, de l'énergie électrique est accumulée dans des enroulements statoriques (8-U, 8-V, 8-W) de la machine électrique (1) en ce que
▪ toutes les unités de couplage (6-31 à 6-3m), qui se situent dans la branche d'alimentation d'énergie (3-3) de cellules accumulatrices d'énergie (5-31) qui doivent être chargées sont commandées de telle sorte que les cellules accumulatrices d'énergie (5-31 à 5-3m) respectivement associées soient isolées par un interrupteur de l'unité de couplage (6-31 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ on ferme au moins un interrupteur high side (22-11) susceptible d'être commandé du module redresseur (9) bidirectionnel, susceptible d'être commandé,
- **en ce que** dans une phase de fonctionnement libre, consécutive à la phase de charge
▪ toutes les unités de couplage (6-31), lesquelles sont associées à des cellules accumulatrices d'énergie (5-31) qui doivent être chargées sont commandées de telle sorte que les cellules accumulatrices d'énergie (5-31) respectivement associées soient commutées dans la branche d'alimentation d'énergie (3-3),
▪ toutes les unités de couplage (6-32 à 6-3m), lesquelles se situent dans la branche d'alimentation d'énergie (3-3) de cellules accumulatrices d'énergie (5-31) qui doivent être chargées, qui ne sont toutefois pas associées elles-mêmes à des cellules accumulatrices d'énergie (5) qui doivent être chargées sont commandées de telle sorte que les cellules accumulatrices d'énergie (5-32 à 5-3m) respectivement associées soient isolées par un interrupteur de l'unité de couplage (6-32 à 6-3m) associée, susceptible d'être commandée et que ledit interrupteur soit shunté dans la branche d'alimentation d'énergie (3-3),
▪ toutes les unités de couplage (6) restantes sont commandées de telle sorte que les branches d'alimentation d'énergie (3-1, 3-2) respectives soient interrompues et
▪ on ferme les interrupteurs high side (22-11, 22-21, 22-31) susceptibles d'être commandés du module redresseur (9) bidirectionnel, susceptible d'être commandé.
